# EUROPEAN PATENT SPECIFICATION

(11) **EP 2 440 390 B1**
(45) Date of publication and mention of the grant of the patent: **16.05.2018**
(21) Application number: 10734374.1
(22) Date of filing: 09.06.2010
(51) Int. Cl.: B29C 70/50, B29B 15/12, B32B 5/02, B32B 5/08, B32B 5/26

(54) **METHOD OF DELIVERING A THERMOPLASTIC AND/OR CROSSLINKING RESIN TO A COMPOSITE LAMINATE STRUCTURE**
VERFAHREN ZUR APPLIKATION EINES THERMOPLASTISCHEN UND/ODER VERNETZUNGSHARZES AUF EINE LAMINATVERBUNDSTRUKTUR
PROCÉDÉ DE DISTRIBUTION D'UNE RÉSINE THERMOPLASTIQUE ET/OU DE RÉTICULATION À UNE STRUCTURE STRATIFIÉE COMPOSITE

(30) Priority: 11.06.2009 US 456117
(43) Date of publication of application: 18.04.2012
(73) Proprietor: Spunfab, Ltd., Cuyahoga Falls, OH 44223 (US)
(72) Inventor: KEUCHEL Kenneth Herbert, Ohio 44223 (US)
(74) Representative: Schweitzer, Klaus
(86) International application number: PCT/US2010/001658
(87) International publication number: WO 2010/144134

(56) References cited:
- EP-A1- 1 593 490
- EP-A1- 2 138 530
- WO-A1-98/30386
- WO-A1-02/062563
- WO-A1-2006/111037
- WO-A1-2008/034543
- WO-A1-2008/056123
- GB-A- 2 091 633
- US-A- 6 034 009

## Description

### BACKGROUND OF THE INVENTION

The marine, automotive, trucking, rail, aerospace, defense, recreation, chemical, infrastructure, and other industries look to composite materials to take advantage of their unique properties, especially being corrosion-free or corrosion-resistant and having a high strength-to-weight ratio. Composites are also resistant to fatigue and chemical attack. They offer high strength and stiffness potential in lightweight components. There is a need, however, to develop composite manufacturing processes, especially with reduced cycle times, which dramatically reduce the cost of composites, especially large structures, while retaining their high strength and stiffness. A fiber-reinforced composite in which a continuous reinforcing fiber bundle is impregnated (infused) with a resin is generally called a prepreg, and is widely used as a base to be molded into the members of motor vehicles and airplanes, general industrial materials, and, in addition, sporting and leisure applications such as golf clubs.

Infusion of dry preforms of high modulus fibers with wet resin, with the use of vacuum (atmospheric pressure) as the driving force, is known in the prior art. While there may be earlier examples, the Marco method (U.S. Pat. No. 2,495,640) was first used in the early 1940s. Palmer (U.S. Pat. No. 4,942,013) and Seemann (U.S. Pat. No. 4,902,215) are more recent examples. There are also a number of other approaches covered in composite technology literature: RIRM, RIFT, and UV-VaRTM. Boeing's Double Bag Vacuum Infusion (DBVI) process, described in U.S. patent application Ser. No. 09/731,945, makes numerous claims regarding the control of the vacuum-assisted infusion with a resin distribution media, multiple porting, or channels. Seemann has been awarded other patents largely having to do with integration of a resin distribution matrix into a re-usable bag, such as U.S. Patents Nos. 5,052,906; 5,316,462; 5,439,635; and 5,958,325.

The physics of the infusion process requires a pressure differential across the preform to drive the infusion of the resin into the preform. The traditional approaches infuse the resin at full atmospheric pressure, i.e., the reservoir from which the resin is being drawn is open to the atmosphere. During infusion as the preform fills with resin, the pressure inside the vacuum bag (i.e., the impervious outer sheet that contains the flow of resin during the infusion) in the filled volume approaches the pressure outside the bag, namely atmospheric pressure. Because vacuum-only resin infusion relies solely on the overpressure of the atmosphere to constrain the preform beneath the bag against the forming surface, this rise in pressure inside the bag reacts against the atmospheric pressure above. The remaining difference in pressure between that inside the bag and atmospheric pressure (i.e., the net compaction pressure) is all the pressure that is left to constrain the fiber preform on the forming surface. This pressure differential will vary depending upon a number of factors including the profile of the pressure gradient, hence the permeability of the materials being infused, and the timing sequence of clamping the inlet and exit lines. The finished thickness of a given of the preform. Compaction is achieved by pressing the preform to achieve its finished fiber volume fraction. Achieving a high fiber volume fraction requires compaction against the forming surface. Proper constraint of the preform against the forming surface during and after infusion until the resin cures is critical to obtaining a high performance structure that results from its having a high fiber volume. If the net compaction pressure is insufficient (in traditional VaRTM, it can approach zero), the preform is free to float in the resin or to spring back from its compacted state, leading to reduced fiber volume fractions.

Seemann Composites, Inc. has produced a variety of composite structures using the Seemann Composite Resin Infusion Molding Process (SCRIMP) from flat panels to complex demonstration wing structures (Boeing-LB 1998-2000), with the intention to use SCRIMP for making aerospace parts. A common problem with these structures and panels has been lower than desired fiber volumes and concomitantly higher than desired finished thickness per ply for aerospace use. The preferred range for the carbon fiber volume fraction in aerospace composites is nominally at the higher end of that attainable, nominally 52-60%, depending upon the preform being infused. The desired fiber volume is highly dependent upon the type of weave or other fiber architecture and the size and count of carbon tow for example. The laminates and structures Seemann Composites made for Boeing typically had a fiber volume fraction lower than the desired range. Control of the composite thickness through the inches per ply metric is important in order to control the resulting weight of the composite. In traditional resin infusion failure to optimize the thickness often means that each ply is thicker than necessary. Resin lacking fiber reinforcement has poor strength, so uncontrolled plies in a laminate can form a pattern of high strength areas sandwiched between lower strength areas. The overall laminate will have lower strength than a properly consolidated laminate having the optimal per ply thickness, and will generally require more plies to achieve the desired strength. More plies translate to more material and more labor, making already expensive parts even more expensive. It also translates to more weight, reducing overall performance of the aerospace system in which the composites are used.

As described in U.S. Pat. No. 4,902,215, Seemann induced preferential flow and pressure in the flow media above the fiber preform inside the vacuum bag to distribute the infusing resin in a network over the preform. The driving force is a pressure differential or head pressure created primarily by drawing down the pressure inside the bag using a vacuum pump. Atmospheric pressure on the resin pushes resin into the bag through an inlet tube. Resin entering the bag encounters the flow media used to channel the resin to the underlying fiber preform. Resin flows laterally through the flow media over the preform and, subsequently, downwardly into the preform. The preform normally has the lowest permeability to flow (i.e., the highest resistance to the flow of the infusing resin). High performance composites are currently made from prepregs. Woven or unidirectional tapes of the prepregs are placed on a forming mandrel ("laid up") by hand or machine. Debulking (compaction) is often required between plies in a laminate to remove air before the laminates are vacuum bagged (i.e., enclosed in an inert atmosphere under vacuum to withdraw emitted volatiles released during cure of the resin) and consolidated (i.e., exposed to elevated temperature and pressure in a curing cycle) in autoclaves or presses to achieve high fiber volume components. The prepreg materials typically are expensive (especially those using high modulus carbon fiber). The raw prepreg materials have limited shelf lives because the resins that impregnate the fibers may continue to react ("advance") at ambient temperature. Advance of the resin adversely affects the properties of the resulting composite.

Since a molded article obtained by molding a prepreg is required to have good surface appearance, and mechanical properties, it is necessary to sufficiently impregnate or infuse the reinforcing fiber bundle with a resin and decrease voids as far as possible. In this case, impregnation refers to a state where the thermoplastic resin permeates among single fibers of the reinforcing fiber bundle substantially without any clearance between fibers.

EP 2 138 530 A1 discloses prepregs comprising a layer of fiber bundles infused with a low viscosity prepolymer and a further layer of a thermoplastic resin, in particular as set forth in the examples and claims. According to this document, a bundle of carbon fibers is passed through on a roll to adhere a given amount of a polymer per unit length of the carbon fiber bundle. This infused carbon fiber bundle is shown to serve as the core in a sheath-core structure, wherein the core is surrounded by the thermoplastic resin.

WO 2006/111037 A discloses a melt processable composite material comprising at least one non-woven fabric that consists of thermoplastic fibers and another layer comprising a fabric or scrim of reinforcing fibers. These reference discloses a layered composite with a thermoplastic layer between the reinforcing fiber layer.

WO 2008/056123 A discloses a multi-layer composite material. A polymeric resin layer is interleaved between fiber-reinforcing layers to bond the fiber-reinforcing layers and form multi-layer composite material. This process also provides a layered structure with a thermoplastic fiber layer between the reinforcing fiber layers.

In recent years, prepregs of a comingled form and a discontinuous comingled form have been developed. A comingled form refers to a composite form in which a continuous thermoplastic resin is made to exist as fibers in a continuous reinforcing fiber bundle. A discontinuous comingled form refers to a composite form with discontinuous thermoplastic or thermosetting resin fibers in a continuous reinforcing fiber bundle.

For example, JP60-209033A discloses a method for producing a prepreg of a comingled form comprising a continuous reinforcing fiber bundle and a continuous thermoplastic resin fiber bundle. This form is excellent in drapability, since a prepreg itself is already impregnated with a resin, and furthermore, since the reinforcing fiber bundle and the resin are disposed nearby. However, when the prepreg is carried or shaped according to a mold, the reinforcing fiber bundle and the resin may separate, and a preliminary step of spinning the thermoplastic resin into a multifilament is then needed.

JP03-47713A discloses a process for producing a prepreg of a discontinuous comingled form, comprising the steps of placing a sheet comprising short discontinuous thermoplastic resin fibers cut to a length of 20 mm to 200 mm oriented at random on a continuous reinforcing fiber bundle, and forcibly intermingling using a water jet. The problem that the reinforcing fiber bundle the thermoplastic resin fibers separate does not arise. However, since the thermoplastic resin fibers are disposed as short fibers, the prepreg becomes bulky and has such a problem with drapability that it cannot be easily shaped, depending on the shape of the mold. Furthermore, since a water jet is used, it can cause the reinforcing fibers to be broken or become curved, and there arises such a problem that the molded article may have inferior surface appearance, and mechanical properties. Therefore, spinning a thermoplastic resin into multifilaments and cutting them into short fibers using a cutter are required.

As mentioned, the prepregs have a limited shelf life. In some formulations, the resin is carried onto the fiber as a lacquer or varnish containing the monomer reactants that will produce the desired polymer in the composite (i.e., prepregs of the PMR-type). In other formulations, the resin is a relatively low molecular weight thermosetting polymer that crosslinks during cure to form the desired polymer. The resin is held and used in its incomplete state so that it remains a liquid, and can be impregnated onto the fiber or fabric. Reaction of the monomer reactants of the polymer (i.e., its advancing) prior to the intended cure cycle adversely impacts the quality of the final composite because it will be unsuitable for subsequent processing.

Liquid molding techniques such as transfer molding, resin film infusion, resin transfer molding, and structural reaction injection molding (SRIM) typically require expensive matched metal dies and high tonnage presses or autoclaves. Parts produced with these processes are generally limited in size and geometry. The conventional liquid molding resins do not provide the necessary properties for many applications for the composites.

When manufacturing a thermoplastic or crosslinking resin impregnated composite laminate structure, the delivery of the resin system is sometimes difficult because of the high viscosity of such thermoplastic or even some crosslinking resins. When infusing the resin from the outside of the bundle of high modulus fibers, such as carbon fibers or Kevlar® polyphenylene terephthalamide fibers, it can be difficult to substantially completely coat the resin ("wet out") on all of the high modulus fibers within the yarn bundles.

Reinforced thermoplastic or crosslinking materials have wide application in, for example, the aerospace, automotive, industrial/chemical, and sporting goods industries. Crosslinking resins may be impregnated into the reinforcing material before curing, while such resinous materials are lower in viscosity. Thermoplastic compositions are more difficult to impregnate into the reinforcing material because of their comparatively higher viscosities. On the other hand, thermoplastic compositions offer a number of benefits over crosslinking compositions. For example, thermoplastic prepregs are easier to fabricate into articles. Another advantage is that thermoplastic articles may be recycled. In addition, a wide variety of properties may be achieved by proper selection of the thermoplastic matrix.

Fiber-reinforced plastic materials are usually manufactured by first impregnating the fiber reinforcement with resin to form a prepreg, then consolidating two or more prepregs into a laminate, optionally with additional forming steps. As previously discussed, consolidation of the fiber bundles is typically necessary to remove voids between the fibers that result from the inability of the resin to fully displace air from the fiber bundle, tow, or roving during the processes that have been used to impregnate (infuse) the fibers with resin. The individually impregnated roving yarns, tows, plies, or layers of prepregs are usually consolidated by heat and pressure or with heat and vacuum as by vacuum-bag molding and compacting in an autoclave. The consolidation step has generally required the application of very high pressures or vacuums at high temperatures and for relatively long times. In the past, a thermoplastic composition has typically been heated, slurried, commingled or diluted with solvents in order to reduce the viscosity of the composition before it is used to impregnate the reinforcing material. These methods have suffered from serious drawbacks.

In the case of using solvent to reduce viscosity, the solvent must be driven off after the impregnation step, resulting in an additional step in the process as well as unwanted volatile emissions. Moreover, the desired matrix may be insoluble in common solvents. In the case of heating the thermoplastic matrix in order to reduce its viscosity, the dwell time of the resin in the heated zone may result in degradation of the resin, with attendant decrease in the desired mechanical properties. Furthermore, the molecular weight of the resin may need to be kept lower than would be desired for optimum mechanical properties of the ultimate product, in order to facilitate the impregnation step. Finally, as noted above, known processes for impregnating thermoplastic resin into reinforcing materials have required lengthy consolidation of the prepreg materials at high temperatures and pressures, in order to develop the best physical strength and other properties and to minimize or eliminate outgassing during consolidation or in later steps, e.g., finishing processes. Outgassing during consolidation often results in voids within the composite that can cause microcracking or premature delaminating that may adversely affect mechanical properties. Outgassing during coating steps tends to cause pin holing or popping in the substrate or coating, resulting in an undesirably rough and blemished surface or finish.

### SUMMARY OF THE INVENTION

The present invention provides a process for producing a prepreg of reinforcing fibers according to claim 1.

### DESCRIPTION OF THE DRAWING

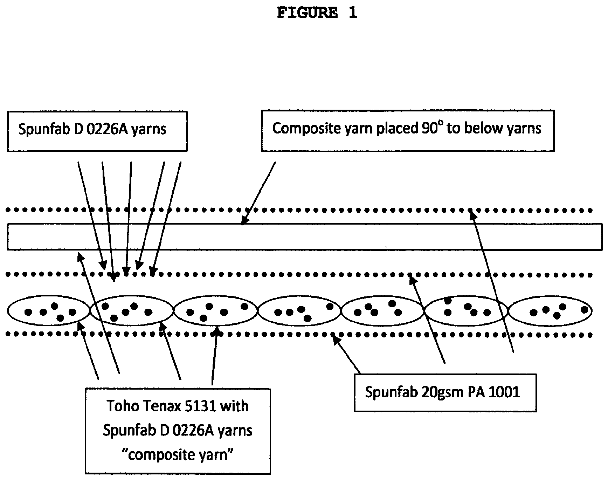

The composite laminate produced by the process described in the Example below is illustrated in Figure 1.

### DETAILED DESCRIPTION OF THE INVENTION

The reinforcing fiber bundle layer may be in the form of a bundle of fibers, such as chopped fibers, or continuous filaments. In the prepreg, the reinforcing fiber bundle layer contains a thermoplastic and/or crosslinking resin within the fiber bundle. The thermoplastic and/or crosslinking resin can be in the form of a fiber bundle, yarn, tape, non-woven web or film, when it is plied with the reinforcing fibers or the reinforcing fiber bundle is wound around the thermoplastic and/or crosslinking resin. The thermoplastic and/or crosslinking resin may be in the form of a non-woven web, a yarn bundle of non-continuous fibers or continuous filaments, a film or a tape in this embodiment. It is also described herein, when utilizing an appropriate amount of heat and pressure, the thermoplastic and/or crosslinking resin may be squeezed through the middle or core of the high modulus reinforcing fiber bundle. In this case, the thermoplastic and/or crosslinking resin may be in the form of a non-woven web, a yarn bundle of non-continuous fibers or continuous filaments, a film, a tape, a powder or a melt. In addition, in another embodiment, a powder of the thermoplastic and/or crosslinking resin may be dispersed within or mixed with the reinforcing fiber bundle.

The fiber reinforcing fiber bundle layer is plied with the thermoplastic and/or crosslinking resin, in an appropriate physical form. In a preferred embodiment, the outside layers of the prepreg may comprise a thermoplastic resin to thereby improve the release of the final prepreg from a mold.

In the claimed process, in step a), the content of the thermoplastic and/or thermosetting resin provided within each reinforcing fiber bundle is preferably from 1% to 50% by weight, more preferably from 3% to 30% by weight, based on the weight of the fiber bundle. The claimed process may also utilize a different melting point or different chemical composition thermoplastic and/or crosslinking resin in step a) compared with the melting point or chemical composition of the resin utilized in step b).

The prepreg of the present invention comprises reinforcing fibers or filaments and a thermoplastic and/or crosslinking resin. In this case, the reinforcing fiber bundle used in the present invention is a bundle of reinforcing fibers or filaments (hereinafter referred to as "fibers"), generally aligned in one direction. One or more reinforcing fibers can also be used together. The surface of the reinforcing fibers can also be covered with a metal or the like, and can have a metal vapor-deposited thereon. The surface of the reinforcing fibers can also be treated. Carbon fibers having a low specific gravity, high strength and high elastic modulus can also be used, because they can greatly increase the reinforcing efficiency of the final composite laminate molded article.

Moreover, the reinforcing fiber bundle can also be provided with a sizing agent for the purpose of making it easier to handle. The type of sizing agent, applying method, deposited amount or deposition form, is not especially limited. Furthermore, the reinforcing fiber bundle can also contain any suitable additive.

Examples of the thermoplastic resin that may be used in the present invention include: polyester resins such as polyethylene terephthalate, polybutylene terephthalate, polycyclo-hexanedimethyl terephthalate and liquid crystal polyesters, polyolefins such as polyethylene, polypropylene and polybutylene, polyoxymethylene resin, polyamide resins, polycarbonate resins, polyarylate resins, polymethyl methacrylate resins, polyvinyl chloride, ABS resins, AES resins, AAS resins, styrene-based resins such as polystyrene (PS) resins and HIPS resins, polyphenylene sulfide (PPS) resins, modified polyphenylene ether (PPE) resins, polyimide resins, polyamideimide resins, polyether imide resins, polysulfone resins, polyether sulfone resins, polyether ketone resins, polyether ether ketone resins, phenol resins, phenoxy resins, their copolymers and modification products. One of them can be used, or two or more of them can also be used together. Above all, in view of the mechanical properties of the obtained molded article and moldability, it is especially preferred to use at least one thermoplastic resin selected from the group consisting of polyamide resins, polyester resins, polyphenylene sulfide (PPS) resins, polyether imide resins, polycarbonate resins and styrene-based resins.

The present invention is also particularly advantageous for processes utilizing crosslinking resin systems when the viscosity of the resin composition, at the desired processing temperature, would otherwise make processing difficult or result in degradation of the resin. For example, the claimed methods are particularly suitable for so-called "pseudo thermoplastic" materials that exhibit behaviors during prepregging similar to those of true thermoplastic materials. The claimed processes also allow heating the reinforcing material to a temperature that will cause partial curing of the crosslinking material, when such partial curing is desired before forming the final article. Finally, the present invention provides a method for thermoset prepregging for crosslinking compositions having a short "pot life", at the temperature needed to produce a suitable resin viscosity. "Pot life" is a term of art that describes the interval of time after mixing during which a crosslinking composition may be used before it sets up (i.e., before the viscosity builds up, due to crosslinking.

All types of fiber reinforcements or other reinforcing materials commonly used for these applications may be used in the processes of the invention. It is also possible for a roving bundle or tow to be shaped before being impregnated, for example to be flattened to a tape, or for the reinforcing fibers to be used as a woven cloth. Useful fibers include, without limitation, glass fibers, carbon and graphite fibers, polymeric fibers including aramide fibers, boron filaments, ceramic fibers, metal fibers, asbestos fibers, beryllium fibers, silica fibers, silicon carbide fibers. The fibers may be conductive and such conductive fibers, for example conductive carbon fibers or metal fibers, may be used to produce articles for conductive or static charge dissipative applications or EMI shielding.

The fiber filaments are usually formed into a bundle, called a roving or tow, of a given uniform cross-sectional dimension. The fibers of the bundle are usually all of the same type, although this is not essential to the claimed invention. For a particular impregnating resin matrix composition, a reinforcing medium should be chosen that can withstanding the temperatures and shear suitable for producing the desired prepreg. In particular, if a fiber is coated with a sizing or finishing material, this material should be one that is stable and remains on the fiber at the selected processing temperature. A sizing or finishing material, if employed, may be selected and applied according to methods well known in the art. Unsized fibers such as carbon are employed in some applications, in order to optimize mechanical properties.

In one embodiment, fiberglass filaments may be combined with a thermoplastic resin. Fiberglass filaments typically are coated with a sizing and/or finishing material. The sizing material or finishing material used is selected to be able to withstand the temperatures to which the fiberglass is heated during the process. One such preferred sizing is Owens Corning 193/933.

The fiber bundle, mat, cloth, or other reinforcing material is heated to a selected temperature above the melting point, softening point, or glass transition temperature (Tg) of the impregnating resin matrix composition. The temperature to which the fibrous reinforcing material is heated that is desirably sufficient to produce a prepreg having substantially no voids. The temperature to which the fibrous reinforcing material is heated in the present invention is thus sufficient to cause the impregnating resin to fully or substantially fully wet out the fibers of the fibrous reinforcing material. In a preferred embodiment of the invention, the reinforcement is heated to at least -4 °C (25 degrees F.), preferably to at least 10 °C (50 degrees F.), more preferably to at least 24 °C (75 degrees F.), and even more preferably to at least 38 °C (100 degrees F). above the melting point, softening point, or Tg of the resin matrix composition; and up to 260 °C (500 degrees F.), preferably up to 204 °C (400 degrees F.), more preferably up to 177 °C (350 degrees F.), and even more preferably up to 149 °C (300 degrees F.) above the melting point, softening point, or Tg of the resin matrix composition. In one preferred embodiment, the reinforcing material is heated to a temperature above 177 °C (350 degrees F.), and below 427 °C (800 degrees F). Because the length of time to which the matrix resin composition is exposed to such temperature is relatively short, the roving bundle or tow may be heated to temperatures that might otherwise cause thermal degradation of the resin matrix resin composition.

The means for heating the fiber is not generally critical, and may be chosen from any number of means generally available for heating materials. Particular examples of such means include, without limitation, radiant heat, inductive heating, infrared tunnels, or heating in an oven or furnace, e.g. an electric or gas forced air oven.

Insufficient heating may result in undesirable resin conglomeration at the surface of the roving bundle, tow, or other reinforcement. Thus, the temperature to which the fiber bundle is heated should be sufficient to allow the resin to flow between the fibers to impregnate the fiber bundle in a substantially uniform manner. The methods of the claimed invention allow the thermoplastic and/or crosslinking resin matrix composition to substantially completely impregnate the fibers of the reinforcing fiber bundle, instead of agglomerating at the surface. The particular temperature chosen will depend upon factors that would be obvious to the person of skill in the art, such as the particular type of resin used, the denier of the fibers, and the profile or size of the bundle, and can be optimized by straightforward testing.

The matrix resin compositions used in the methods of the invention may be crosslinking or, preferably, thermoplastic resin compositions. Virtually any thermoplastic resin suitable for forming into articles by thermal processes, molding, extrusion, or other such processes may be employed in the methods of the invention. Preferred thermoplastic resins have been previously discussed. The thermoplastic resins may have a melting point, softening point, or Tg ranging up to 399 °C (750 degrees F.) Mixtures of two or more of such resins may also be used. Preferred crosslinking resin compositions include thermosetting resins, such as an epoxy that cures with an amine, acid, or acid anhydride and polyester that cures through unsaturation, a bismaleimide, a polyimide or phenolics.

The matrix resin compositions may include one or more additives, such as impact modifiers, mold release agents, lubricants, thixotropes, antioxidants, UV absorbers, heat stabilizers, flame retardants, pigments, colorants, nonfibrous reinforcements and fillers, plasticizers, impact modifiers such as ionomers or maleated elastomers, and other such customary ingredients and additives. In the case of a thermosetting resin composition, a catalyst or initiator for the curing reaction may advantageously be included.

In the prepreg, the reinforcing fiber bundle layer, which contains a thermoplastic and/or crosslinking resin within the fiber bundle, to obtain better physical properties, a higher viscosity resin is frequently desired. However, the higher the viscosity of the thermoplastic and/or crosslinking resin, the more difficult it is to properly wet out the high modulus reinforcing fiber bundle.

In the present invention, the process provides a reinforcing fiber bundle layer wherein such bundle contains a thermoplastic and/or crosslinking resin within the fiber bundle and then providing a layer of a thermoplastic and/or crosslinking material layer on at least one side of the high modulus fiber layer. An intermediate layer of a thermo-plastic and/or crosslinking material layer can also be introduced between two or more high modulus fiber layers of the composite laminate to be produced. In this process, the resulting layers, with the thermoplastic and/or crosslinking resin layer(s), are then compressed under an appropriate amount of heat and pressure. The thermoplastic and/or crosslinking resin that has been provided within the high modulus fiber bundles melts, upon heating to a suitable temperature, and wets out the fibers of the fiber bundles from the inside out. The thermoplastic and/or crosslinking material that was introduced on at least one side of the high modulus fibers layer(s) also wets out the fibers of the reinforcing fiber bundle(s), from the outside of the structure. This combined process serves to substantially fill in the voids or spaces between the fibers of the reinforcing fibers bundle(s).

In this manner, two different melting point or chemical composition thermoplastic and/or crosslinking resins can be utilized in the composite laminate. A higher modulus resin, most often having a higher viscosity, can also be used within the yarn bundle and/or on the outside of the layered yarn bundles, allowing more effective infusing of the resin into the reinforcing fiber bundles. This allows much more complete wetting out of the individual fibers within the fiber bundles, while at the same time allowing the use of higher modulus, higher viscosity thermoplastic and/or crosslinking resins.

The form of the thermoplastic and/or crosslinking resin on or between the layer or layers of the high modulus fiber bundles may include a woven cloth, a film, a powder, a woven or nonwoven net or mesh, a sprayed fibrous structure, a woven scrim or uniaxial scrim, chopped fibers, or a powder or fine pellet dots. The thermoplastic and/or cross-linking resin within the fiber bundle may be in the form of a fiber or yarn formed from continuous or non-continuous filaments or fibers, a nonwoven tape or web, a powder, a sprayed fibrous structure or a film. The thermoplastic and/or cross-linking resin may also comprise a mixture of a thermoplastic resin and a crosslinking resin. By combining a thermoplastic resin with a crosslinking resin, which may be a thermosetting resin system, or combining resins having different chemical compositions, melting points or viscosities, the delivery and infusion of the resin can be optimized.

In general, the prepregs of the invention may comprise from at least 1% by weight resin, and up to 150% by weight resin, based upon the weight of the fibers. The preferred ranges of the weight of resin included in the prepreg will depend upon the specific resin and reinforcing material used, as well as upon the desired properties and use of the article to be formed by the process. Optimum ratios of resin to fiber may be determined according to known methods. In a preferred embodiment, the resin is at least 25% by weight, and up to 75% by weight, based upon the weight of the reinforcing fibers.

The preferred impregnated reinforcing fiber bundle produced according to the claimed invention may be described as "fully impregnated"; that is, the interface between the fibers and the resin is substantially free of voids. An impregnated fiber bundle, for example, has a set and uniform dimension with a given amount of thermoplastic resin matrix. This impregnated fiber bundle can be molded quickly into a finished part having substantially no voids and having excellent properties, without the need for a lengthy or rigorous consolidation step. Thermoplastic composite matrices are preferred over thermoset matrices when properties of toughness, capacity for recycling and/or reforming and/or post-forming of the piece, resistance to UV degradation, or other specific properties, particularly available in thermoplastic mediums, are required.

It is known in the art that the properties developed in the final composite laminates are dependent upon the impregnation process and other fabrication steps following impregnation. This is particularly true for higher viscosity thermoplastics that are impregnated neat (that is, without including a solvent). The prepregs produced according to the processes of the present invention have substantially uniform dimensions, substantially homogenous distributions of the impregnated resin, and are essentially free of all voids between the fibers.

The prepregs of the present invention may be cut or trimmed to a desired shape. Plies can be trimmed from a prepreg roll into the desired shape, size and orientation by means of any cutting device known in the art. Plies can be stacked by hand or by machine in what is known in the art as a lay-up operation. Continuous directional fibrous structures may be formed by compression molding, filament winding, pultrusion, or combinations of these processes. Compression molding is usually employed for forming complex shapes. The prepreg may be formed into articles according to any of the methods known in the art. In addition to compression molding, vacuum molding process may also be used. Other processes, such as injection molding, thermoforming, blow molding, calendering, casting, extrusion, filament winding, laminating, injection molding, rotational or slush molding, transfer molding, lay-up or contact molding, or stamping may be used with the impregnated prepreg materials formed by the processes of the present invention.

The processes of the invention may be used to provide prepregs that may be used to form many different kinds of useful articles. Examples of such articles include, without limitation, air bag canisters, bumper beams, frame cross members, high strength brackets, leaf springs, seat frames, skid plates, torsion bars, wiper arms, fencing, gears, highway reinforcing rod, pipe hangers, power line cross arms, boat trailers, airplane parts, outboard engine cowlings, bow limbs, car top carriers, horse shoes and ballistic applications, such as protective vests or helmets. The inventive methods and novel prepregs may be advantageously used to form any article that might be formed using previously known prepregs and methods.

The prepregs of the present invention can be produced by a production process comprising, in part, air-blowing a heated and molten thermoplastic and/or crosslinking resin, to form a layer comprising the thermoplastic and/or crosslinking resin layer, and then laminating a reinforcing fiber bundle layer with the layer comprising the thermoplastic and/or crosslinking resin. In the first step, if a resin is heated to be molten, and subsequently air-blown, it can be processed into a form suitable for use in the present process. In this case, as the method for heating and melting a thermoplastic resin, a process may use a single-screw extruder, or a double-screw extruder.

In the second step, the layer comprising the thermoplastic and/or crosslinking resin obtained in the first step is laminated onto a continuous reinforcing fiber bundle layer. In this case, the layer comprising a thermoplastic and/or cross-linking resin can be formed separately, and then can be laminated onto the reinforcing fiber bundle layer. However, in the present invention, it is also possible to utilize a method comprising blowing the heated and molten thermoplastic resin onto the continuous reinforcing fiber bundle layer, for laminating the continuous reinforcing fiber bundle layer and the layer comprising the thermoplastic and/or crosslinking resin. The resin infusion process of the present invention ensures that the fiber reinforcing plies in the prepreg will remain compacted, that the prepreg is completely wet out when the infusion is halted, and that optimum fiber volume fractions are achieved, thereby improving the traditional infusion processes. The thermoplastic and/or crosslinking resin layers may be laminated on both the sides of a reinforcing fiber bundle layer.

### EXAMPLE

A spool of Toho TENAX carbon yarn type HTA-5131 (available from Toho Tenax America, Inc.) at 200 tex is unspooled and plied with 3 spools of Spunfab D 0226A thermoplastic yarn (available from Spunfab Ltd.) at 50 denier per spool. The resultant yarns will hereafter he referred to as "composite yarn". The composite yarn is then wound onto a final spool.

The a first layer of the resultant composite yarn is laid uniaxially parallel on top of a first layer of Spunfab 20 gsm PA 1001 non-woven web (available from Spunfab Ltd.). A second layer of 20 gsm Spunfab PA 1001 non-woven web is then placed on top of the first layer of composite yarn. A second layer of uniaxially laid parallel composite yarn is then placed at 90° to the first layer of composite yarn. Then a third layer of 20 gsm Spunfab PA 1001 non-woven web is placed on top of the second layer of composite yarn.

Release paper is placed on the top and bottom of the above sandwiched composite layers and the sandwiched composite layers are then placed in a platen press set to 138°C(280°F). The press is closed for 40 seconds at approximately 34.5 kPa(5 psi) of pressure. After the press opens, the molten composite is then placed between two aluminum platens maintained and allowed to cool for 30 seconds. Upon examination, the fibers of the resultant composite laminate were all substantially completely wetted out.

## Claims

1. A process for producing a prepreg of reinforcing fibers, the process comprising the steps of: a) providing at least two reinforcing fiber bundle layers wherein each fiber bundle contains a thermoplastic and/or crosslinking resin within the fiber bundle; b) providing an intermediate layer of a thermoplastic and/or crosslinking material layer between the high modulus fiber layers of step a); and c) compressing said layers from step b) under an appropriate amount of heat and pressure, and thereby producing a prepreg, wherein the process comprises plying a thermoplastic and/or crosslinking resin, in the form of a yarn, a tape, a non-woven web or film, with each fiber bundle of the reinforcing fiber bundle layer of step a).

2. The process of claim 1, wherein in step a) the content of the thermoplastic and/or crosslinking resin provided within each reinforcing fiber bundle is from 1% to 50% by weight, based on the weight of the fiber bundle.

3. The process of claim 1, wherein in step a) the content of the thermoplastic and/or crosslinking resin provided within each reinforcing fiber bundle is from 3% to 30% by weight, based on the weight of the fiber bundle.

4. The process of claim 1, comprising utilizing a different melting point thermoplastic and/or crosslinking resin in step a) compared with the resin utilized in step b).

5. The process of claim 1, comprising utilizing a different chemical composition thermoplastic and/or crosslinking resin in step a) compared with the resin utilized in step b).

6. The process of claim 1, further comprising in step a) squeezing the thermoplastic and/or crosslinking resin through the middle of each bundle of said reinforcing fiber bundle layer, utilizing an appropriate amount of heat and pressure.

7. The process of claim 1, wherein the fiber bundle in step a) contains a thermoplastic resin.

## Patentansprüche

1. Verfahren zum Herstellen eines Prepregs aus Verstärkungsfasern, wobei das Verfahren die Schritte umfasst: a) Bereitstellen von wenigstens zwei Verstärkungsfaserbündelschichten, wobei jedes Faserbündel ein thermoplastisches und/oder vernetzendes Harz innerhalb des Faserbündels enthält; b) Bereitstellen einer Zwischenschicht aus einer thermoplastischen und/oder vernetzenden Materialschicht zwischen den Faserschichten mit hohem Modul von Schritt a); und c) Komprimieren der Schichten von Schritt b) unter einem geeigneten Betrag von Hitze und Druck, um ein Prepreg zu erzeugen, wobei das Verfahren Schichtbildung eines thermoplastischen und/oder vernetzenden Harzes in der Form eines Fadens, eines Bands, eines Vlieses oder eines Films mit jedem Faserbündel der Verstärkungsfaserbündelschicht von Schritt a) umfasst.

2. Verfahren gemäß Anspruch 1, wobei bei Schritt a) der Gehalt an dem thermoplastischen und/oder vernetzenden Harz, das innerhalb jedes Verstärkungsfaserbündels bereitgestellt ist, von 1 Gew.-% bis 50 Gew.-% bezogen auf das Gewicht des Faserbündels beträgt.

3. Verfahren gemäß Anspruch 1, wobei bei Schritt a) der Gehalt an dem thermoplastischen und/oder vernetzenden Harz, das innerhalb jedes Verstärkungsfaserbündels bereitgestellt ist, von 3 Gew.-% bis 30 Gew.-% bezogen auf das Gewicht des Faserbündels beträgt.

4. Verfahren gemäß Anspruch 1, umfassend bei Schritt a) Verwenden eines thermoplastischen und/oder vernetzenden Harzes mit einem anderen Schmelzpunkt im Vergleich zu dem bei Schritt b) verwendeten Harz.

5. Verfahren gemäß Anspruch 1, umfassend bei Schritt a) Verwenden eines thermoplastischen und/oder vernetzenden Harzes mit einer anderen chemischen Zusammensetzung im Vergleich zu dem bei Schritt b) verwendeten Harz.

6. Verfahren gemäß Anspruch 1, ferner umfassend bei Schritt a) Quetschen des thermoplastischen und/oder vernetzenden Harzes durch die Mitte jedes Bündels der Verstärkungsfaserbündelschicht unter Verwendung eines geeigneten Betrags von Hitze und Druck.

7. Verfahren gemäß Anspruch 1, wobei das Faserbündel bei Schritt a) ein thermoplastisches Harz enthält.

## Revendications

1. Procédé de production d'un préimprégné de fibres de renforcement, le procédé comprenant les étapes de : a) fourniture d'au moins deux couches de faisceau de fibres de renforcement, dans lequel chaque faisceau de fibres contient une résine thermoplastique et/ou de réticulation au sein du faisceau de fibres ; b) fourniture d'une couche intermédiaire d'une couche de matériau thermoplastique et/ou de réticulation entre les couches de fibres à haut module d'élasticité de l'étape a) ; et c) compression desdites couches de l'étape b) sous une quantité appropriée de chaleur et pression, et ainsi production d'un préimprégné, dans lequel le procédé comprend le retordement d'une résine thermoplastique et/ou de réticulation, sous la forme d'un fil, d'un ruban, d'une toile ou d'un film non tissé, avec chaque faisceau de fibres de la couche de faisceau de fibres de renforcement de l'étape a).

2. Procédé selon la revendication 1, dans lequel, dans l'étape a), la teneur en résine thermoplastique et/ou de réticulation fournie au sein de chaque faisceau de fibres de renforcement est de 1 % à 50 % en poids, sur la base du poids du faisceau de fibres.

3. Procédé selon la revendication 1, dans lequel, dans l'étape a), la teneur en résine thermoplastique et/ou de réticulation fournie au sein de chaque faisceau de fibres de renforcement est de 3 % à 30 % en poids, sur la base du poids du faisceau de fibres.

4. Procédé selon la revendication 1, comprenant l'utilisation d'une résine thermoplastique et/ou de réticulation de point de fusion différent dans l'étape a) comparativement à la résine utilisée dans l'étape b) .

5. Procédé selon la revendication 1, comprenant l'utilisation d'une résine thermoplastique et/ou de composition chimique différente dans l'étape a) comparativement à la résine utilisée dans l'étape b).

6. Procédé selon la revendication 1, comprenant en outre dans l'étape a) l'exprimage de la résine thermoplastique et/ou de réticulation par le milieu de chaque faisceau de ladite couche de faisceau de fibres de renforcement, en employant une quantité appropriée de chaleur et pression.

7. Procédé selon la revendication 1, dans lequel le faisceau de fibres à l'étape a) contient une résine thermoplastique.
